Europäisches Patentamt

European Patent Office

Office européen des brevets

(19)

(11) Publication number: **0 415 529 A2**

# EUROPEAN PATENT APPLICATION

(12)

(21) Application number: **90307330.2**

(22) Date of filing: **04.07.90**

(51) Int. Cl.⁵: **G06F 15/62, H04N 1/41, G06F 15/40**

The title of the invention has been amended (Guidelines for Examination in the EPO, A-III, 7.3).

(30) Priority: **29.07.89 GB 8917390**

(43) Date of publication of application:
**06.03.91 Bulletin 91/10**

(84) Designated Contracting States:
**DE FR GB**

(71) Applicant: **International Business Machines Corporation**
**Old Orchard Road**
**Armonk, N.Y. 10504(US)**

(72) Inventor: **Key, Andrew**
**11 Horns Drie**
**Rownhams, Hampshire S01 8AH(GB)**
Inventor: **Shaylor, Nicholas**
**21 Jenner Way**
**Halterworth, Romsey, Hampshie S051 8PD(GB)**
Inventor: **Garret, Michael John**
**"Saxons" Poles Lane**
**Otterbourne, hapshire S021 2DS(GB)**

(74) Representative: **Harris, Ian Richard**
**IBM United Kingdom Limited Intellectual Property Department Hursley Park**
**Winchester, Hants. SO21 2JN(GB)**

(54) **An information handling system using iconic images.**

(57) An information handling system is described in which data image data, is input into the system via, for example, a scanner, and is compressed to form an iconic image. This iconic image preserves the salient features of the full image, thus allowing user recognition, without preserving unnecessarily fine image detail. The iconic image is stored as a bit map within the system and acts as a pictorial tag to the original full image data, such that it can be utilised to access this full image data. The system removes the need for pages of a file to be displayed page by page; when a user wishes to view the contents of a file, the iconic representations of the file's contents are displayed simultaneously on screen, allowing for the user to easily access the desired page of the file for further processing. It is only at this point that the full image data is accessed. Thus the system allows the user easy access to relevant data without the need to transfer large quantities of superfluous data through the system.

EP 0 415 529 A2

FIG. 4

## AN INFORMATION HANDLING SYSTEM

This invention relates to an information handling system.

With the move towards ever larger and more complex information handling systems, the need has arisen for a user to be able to quickly access and modify data stored within the system.

Prior art information handling systems allow for the user to append an identifier to data files thus enabling later access to the information. However, although these names can be descriptive, difficulties can arise when accessing the file contents, particularly for the user who either didn't originally input the image data and doesn't know what its identifier is, or who has simply forgotten. For a user in this situation, the only option is to examine the full contents of each file, page by page.

The requirements of, in particular, image data handling within an information handling system have evolved dramatically over the last few years. The development of scanning devices with their ability to input large quantities of detailed image data into a system, requires that a modern system be able to efficiently handle substantial amounts of data relating to each image.

"Turn-page" systems access image data, at the user's command, one page at a time. For example, a file may contain data pertaining to several images. In order for the user to access the correct image for subsequent data handling (e.g. sending to a printer), each page of the file is output sequentially to screen, and the user selects the correct image for printing. Such systems require that the full image data for each page be manipulated and presented on screen one page at a time; hence, a great deal of time is spent transferring superfluous data (that is the pages of the file that the user does not want to print) through the system.

JA-PUPA-60254963 describes an image file handling device where images are accessed via a "synthetic image" composed of 16 juxtaposed, reduced original images. Once formed, this synthetic image is itself compressed and stored within the system. When the user wishes to access image data stored within a file, a synthetic image is decompressed and displayed on screen. The user then decides which of the full images represented, he desires to view. The system is inflexible, in that the reduced images are not stored individually, but are grouped in a fixed, predetermined fashion (that is as a synthetic image composed of 16 reduced images). An additional limitation is that, prior to display, the synthetic image has to be decompressed; individual reduced images are not stored in immediately retrievable form (in the form of a bit map).

This, therefore, does not meet an object of the present invention which is to provide an information handling system that allows the user easy access to and manipulation of data, such as image information, without the need to process or transfer large quantites of data through the system.

According to one aspect of the invention, an information handling system is presented including means for storing data input into the system, means for compressing said data to form an iconic image and for storing said iconic image within the system, wherein said iconic image is stored as a bit map and acts as a pictorial tag for accessing the original full input data. This construction achieves the advantage that it facilitates user access to information within the system, without the need for decompression of stored data. Preferably data within files are accessed via pictorial representations, or iconic images, of a plurality of pages in the file being displayed simultaneously on screen, further facilitating the user's access to the stored information. In one arrangement the stored data is scanned image data and the system could include reduction logic allowing for this image data to be displayed as it is input into the system.

In a preferred form of the invention the information handling systems comprises a computer workstation which may include other components such as a display device, scanner, printer, communications links and the like.

According to another aspect of the invention, a method of manipulating data in an information handling system is proposed in which data input into the system is stored and compressed to form an iconic image, wherein said iconic image is stored as a bit map within the system and acts as a pictorial tag to the original input data such that it can be utilised to access the original full input data.

Specific embodiments of the invention will now be described with the aid of the accompanying diagrams in which:-

Figure 1. is a schematic functional block diagram of one embodiment of the invention;

Figure 2. illustrates a block diagram of an information handling system;

Figure 3 is a schematic functional block diagram of an embodiment of the invention;

Figure 4 illustrates iconic images displayed on a monitor screen.

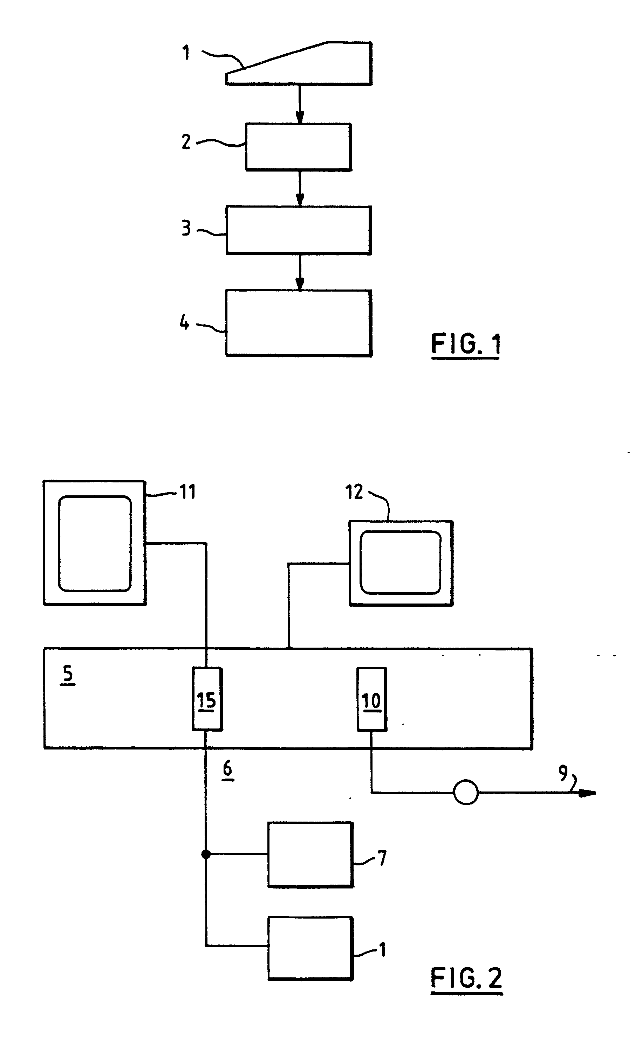

Figure 1 shows a schematic block diagram of the logical structure of one embodiment of the present invention. A scanner (1) scans an image and the resulting digitised image data is transferred to an image store (2). In a prior art system, the data for the full image would be associated with some form of user defined alphanumeric tag, such that it could be accessed on demand from multiple sets of such data and the image be caused to appear on screen. In the present system however, compression logic (3) compresses the data in the image store (2) to form a compressed or iconic image of the original full image data. This iconic image is then stored in bit map form in the system in association with data for the full image (block 4).

The end result of the process is an iconic image that preserves the salient features of the full image, thus allowing user recognition, without retaining unnecessarily fine image detail. The iconic image acts as a pictorial tag which, from the moment of its generation, is associated with its "mother" image data. The iconic image can then be used as a tool to access original full image data.

In a preferred embodiment of the invention, the memories 2 and 4 are implemented by suitably configuring the system memory of a general purpose computer such as a Personal Computer, and the compression logic is formed by appropriate program code. However, it should be understood that the system could be implemented in an external plug-in image card for a personal computer, or indeed that separate memories and/or special purpose logic could be used instead.

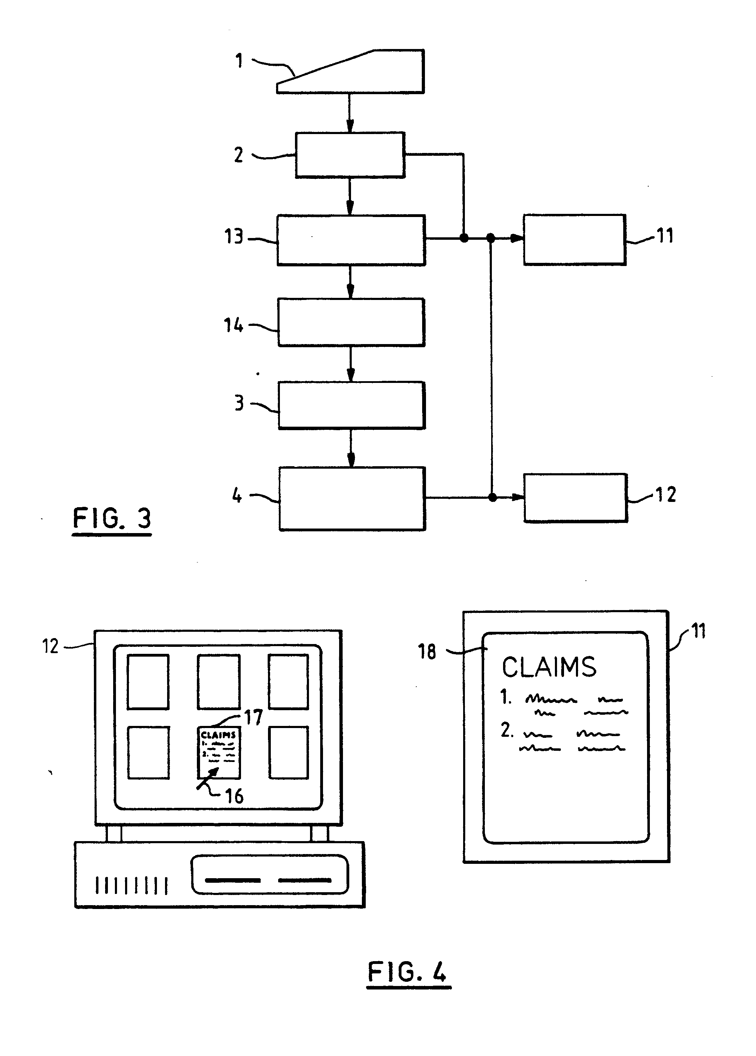

Figure 2, illustrates one example of an information handling system, utilising a Personal Computer (5) attached via a video interface (6) with a scanner (1) and a printer (7), and to a fax machine (9) via adaptor card (10). An image display (11) and monitor (12) are also incorporated in the system.

The schematic of Fig. 3 illustrates an alternative embodiment of the present invention utilising the system shown in Fig. 2. In contrast tc the first embodiment described it includes reduction logic (13) that allows the image data to be displayed on the image display (11) as the image is scanned into the system. A typical reduction would be from the original scanned resolution of 300 dots per inch (DPI) to 100 DPI for display. This reduced data is stored within the system (block 14) and, as described for the first embodiment, the reduced image data is then processed to produce an iconic image. The storage of the image data can be on disk using conventional storage methods. The full image data is typically compressed, to reduce the storage memory necessary, using a reversable storage compression algorithm. This storage compression differs from the compression for forming the iconic image, as no information is lost, the image data is merely stored in "short-hand" form. Storage of the iconic image data again can be on disk and, as for the full image data, follows conventional techniques. However, these iconic data do not undergo further storage compression, in an analogous way to the full image data, but are stored as a full (that is uncompressed) bit map for speed of subsequent re-loading.

The aim of the iconic image compression, is to compress a source image of size W (width) by H (height), to an iconic representation that is W/K pixels wide to H/K pixels high, where K is some scaling factor. It is desirable to ensure that if the image biases strongly towards black or white, the iconic image produced does not appear to be either totally black or totally white. To achieve this the algorithm compares the count of pixels in each K x K group is compared to the average count for a K x K pixel cell.

The following illustrates the basic steps for generating an iconic image from a full image:

1). Source data are stored in a two-dimensional array which is W by H pixels (SOURCE).

2). Output data are stored in a two-dimensional array which is W/K by H/K pixels (DEST).

3). A two-dimensional array (COUNTS) is allocated to hold the counts of black pixels in each K by K cell in the SOURCE array. This array needs to be W/K by H/K integers. If K is chosen such that KxK <256, then a byte (8 bits) for each count will be sufficient. However, if K is larger then a word (16 bits) will be needed.

4). Consider each whole KxK square of pixels in SOURCE.

Count the black pixels in each square and set the corresponding value in COUNTS to reflect the total.

Keep a running total of black pixels in the entire SOURCE array.

5). Divide the running total by W/K x H/K.

This gives the number of black pixels on average in each K by K square.

This value is used as a THRESHOLD.

6). For each count in the COUNTS array, compare the COUNT value against the THRESHOLD value calculated above. Use this to decide on the colour of the corresponding pixel in the DEST array.

7). If the COUNT is above or equal to THRESHOLD then the pixel is black, else it is white.

In the present embodiment, these data arrays are produced by suitably configuring random access storage. Compression logic, preferably in the form of appropriate software, is provided for processing the data in accordance with the steps above.

The iconic compression described above favours black and white equally. For line-art documents, however, better results are achieved by favouring black in a 2:1 or 3:1 ratio. This could be implemented as an added step (5a), which would act to scale the average value so as to make the THRESHOLD 2/3 or 1/2 its original value.

The iconic compression as described could easily be extended to read n bit pixels, simply by increasing the size of the integers in the COUNT array and summing pixel values in each KxK square, not counting pixels.

The COUNTS array could be discarded if two passes of the data were undertaken, counting the pixels in each pass. The first pass could be used to generate the overall total, and the second pass would count pixels in each KxK square threshold and put the result directly in the DEST array. Counting pixels can be a time consuming process, so this alternative should only be used when there is a shortage of available memory.

In one embodiment of the invention: W could be 1728 and W 2200 (facsimile size), with a scaling factor (K) of 16. These are convenient dimensions as summing pixels in a 16x16 square can be achieved rapidly by methods such as loading 2 bytes each row and indexing them in a 256 byte table of "bit counts"

Since there can be from 0 to 256 pixels in a 16x16 square a count is too large to fit into a byte. Since the next step up is a word per count, doubling the memory requirements for COUNTS, the total is calculated and once it has reached 256, 255 is stored in the COUNTS array. This does not noticeably degrade the quality.

Consider as an example:

W = 4

H = 6

K = 2

No modification of THRESHOLD value

| SOURCE | COUNTS | DEST |
|---|---|---|
| W W B W<br>W W W W | 0 1 | W B |
| W W B W<br>W W B W | 0 2 | W B |
| B B B W | 4 2 | B E |
| B B B W | Total = 9 | |
| | Average = 9/1 = 1<br>(integer arithmetic) | |
| | Threshold = 1 | |

The embodiment shown in Figs. 2 and 3 has been implemented, the processing of image data and iconic image generation occurring under programmed control of the adaptor card (15) processor, with iconic and full image data being transferred to PC storage once processing is complete.

Once input and the iconic image generated, the image data can then be managed at the user's discretion, using standard information handling methods. For example, "fixed" iconic images associated with particular predetermined processing tasks are well known in the prior art, and the user could utilise these to control data handling; for example, opening and closing of data files, sending data to be printed or faxed. However, in the present system, each scanned image would be associated with its own "self-generated" iconic image, which would be used as a pictorial tag, that is, as a facility for accessing the original image data. Grouping and regrouping of image data into files is totally flexible as, in contrast to the system described in JA-PUPA-60254963, the iconic images are stored as individual discrete entities, not grouped in a fixed manner to form a larger synthetic image.

In the present system, when a user opens a file containing image data, iconic images associated with each full image contained within that file appear on the monitor (12) screen (Fig. 4). The used can then select, for example using a mouse and cursor (16), a particular iconic image (17) and thus access the associated full image (18) for viewing on a display (11), printing or other processing. The iconic image acts as a pictorial tag, that is as a pictorial stimulus to remind the user as to the contents of the file. Indeed for the user who didnt originally input the data, the pictorial nature of the "identifier" to the file contents would be of particular value in accessing the desired full image from a file quickly. The number of iconic images that can be viewed at any one time is limited by the size of the screen. However, the user could "scroll through" the iconic images in an analogous way to the viewing of script on microfiche. For the sake of simplicity, details of the retrieval and presentation of information stored within the system are not described as these follow conventional data handling techniques, well known in the art.

The benefits of a system utilising the features as described result, at least in part, from the fact that a typical page of image data would require 1Mbyte of memory storage, compared to typically 600 bytes for an iconic image. Manipulating image data in the form of their iconic pictorial representations removes the need to transfer large quantities of image data through the system. In effect, the full image data is only accessed when necessary, for example for printing, thus improving the efficiency of data retrieval. The overhead in processing time to generate and the memory necessary to store the iconic images is insignificant. Storage of the iconic image in bit map form removes the need for decompression of the data prior to display on screen. The original image data can be stored in a compressed form, but intact, in association with the iconic image. Thus when the full image data is required, major processing of the original image data is unnecessary, which again improves the efficiency of the system.

An additional benefit of the system described is its "user-friendly" aspect; the pictorial nature of the iconic image tags associated with each scanned image and the ability of the system to display these simultaneously on screen, allows the user to quickly recognise and access data contained within a file. Overall, the efficiency of data retrieval is improved both by the system having to manipulate less data to perform a particular task, and by the ease of user access to the information.

Although the specific embodiments of the invention have emphasised its use for the retrieval of image data, clearly the system is not restricted to dealing with only this kind of data. Other input devices, for example a keyboard, could be employed to input alphanumeric data to the system which, when converted to bit map form, could be used for the generation of iconic images, allowing for efficient access and manipulation of these data.

## Claims

1. An information handling system comprising means for storing data input into the system, logic for compressing the data to form an iconic image and means for storing the iconic image, the iconic image being stored as a bit map and acting as a tag for accessing the input data.

2. An information handling system as claimed in Claim 1, wherein data within files are accessed via iconic images, displayed simultaneously on screen, representing a plurality of pages in the file.

3. An information handling system as claimed in Claims 1 or 2, wherein the data is scanned image data.

4. An information handling system as claimed in Claim 3, including reduction logic for displaying the scanned image data as it is input into the system.

5. An information handling system as claimed in Claims 3 or 4 including:
a two-dimensional array (SOURCE) for storing W by H pixels of source data, a two dimensional array (DEST) for storing W/K by H/K pixels,
compression means including logic for determining the counts of black pixels in each K x K cell in the SOURCE array for storing in a two-dimensional array (COUNTS) and for determining a THRESHOLD value dependent on the average number of black pixels in said K x K cells in the SOURCE array and for comparing the COUNT value against the THRESHOLD value such that if the COUNT value is above or equal to THRESHOLD, a corresponding pixel in DEST is set to black, else it is set to be white.

6. An information handling system as claimed in Claim 5, wherein the compression logic determines the THRESHOLD value to be 2/3 or 1/2 of the average number of black pixels in K x K cells in the SOURCE array.

7. Information handling system as claimed in any preceding claim comprising a computer workstation including a display device.

8. Information handling systems as claimed in any preceding claim including a scanner for scanning and digitizing an image to input data into the system.

9. A method of manipulating data in an information handling system, wherein data input into the system is stored and compressed to form an iconic image, the iconic image being stored as a bit map within the system and acting as a pictorial tag to the original input data such that it can be utilised to access the original input data.

FIG. 1

FIG. 2

FIG. 3

FIG. 4